# DEMANDE DE BREVET EUROPEEN

(11) **EP 0 770 576 A1**
(43) Date de publication de la demande: **02.05.1997**
(21) Numéro de dépôt: 96402252.9
(22) Date de dépôt: 23.10.1996
(51) Int. Cl.: C01B 3/36

(54) **Procédé et installation de production d'hydrogène et d'énergie**

(30) Priorité: 26.10.1995 FR 9512631
(71) Demandeur: L'AIR LIQUIDE, SOCIETE ANONYME POUR L'ETUDE ET L'EXPLOITATION DES PROCEDES GEORGES CLAUDE, F-75321 Paris Cédex 07 (FR)
(72) Inventeur: Engler, Yves, 94300 Vincennes (FR); Fuentes, François, Walnut Creek, California 94596 (US)
(74) Mandataire: Le Moenner, Gabriel

(57) **Abrégé**

L'invention concerne un procédé de production d'énergie et d'un mélange (30) riche en hydrogène, comprenant les étapes suivantes :
a) on procède dans une unité (14) d'oxydation partielle à une oxydation partielle d'un mélange gazeux entrant (15) hydrocarboné, à l'aide d'un mélange oxydant (16) qui comprend de l'oxygène, afin d'obtenir en sortie d'unité un gaz réactionnel (17) qui comprend de l'hydrogène et du CO;
b) on fait passer le gaz réactionnel obtenu en fin d'étape a), dans un séparateur membranaire (24), qui produit en sa sortie perméat un mélange perméat (25) enrichi en les composants les plus perméables du gaz réactionnel, et en sa sortie résiduaire, un mélange résiduaire (26) enrichi en les composants les moins perméables du gaz réactionnel ;
c) on traite le mélange résiduaire (26) dans une unité de production d'électricité ;
d) on sépare le mélange perméat (25) dans un séparateur (29) par adsorption préférentielle, de façon à obtenir en tant que gaz produit non adsorbé le mélange gazeux (30) riche en hydrogène recherché.

## Description

La présente invention concerne le domaine de la production d'hydrogène par oxydation partielle de mélanges hydrocarbonés (technologie le plus souvent référencée "POX" dans la littérature, pour Partial Oxidation). L'invention concerne plus particulièrement les procédés et installations de production simultanée d'hydrogène et d'énergie.

De nombreux procédés sont rapportés dans la littérature, concernant l'obtention d'hydrogène et/ou d'énergie, sur la base d'une oxydation partielle de mélanges hydrocarbonés (tels que charbon, gaz naturel, naphta, fioul lourd), et donnant lieu, selon les conditions réactionnelles (de température, de pression, de composition des gaz réactifs) à une composition très variable du gaz réactionnel obtenu. On se reportera aux nombreux travaux publiés au nom des sociétés TEXACO, SHELL, ou encore WESTINGHOUSE.

Le gaz réactionnel obtenu en sortie d'unité d'oxydation partielle contient le plus souvent plusieurs dizaines de pourcents du mélange H₂+ CO, mais également de l'azote, du CO₂, de l'argon, etc...

Les procédés disponibles incluent le plus souvent, en aval de l'unité d'oxydation partielle, une ou plusieurs étapes d'épuration du gaz réactionnel : du CO en général par réaction catalytique avec de la vapeur, de tout ou partie de son H₂S, du COS (sulfure de carbonyl), et des NOx (étapes d'épuration bien connues de l'homme de l'art de l'oxydation partielle).

En aval de ces étapes d'épuration, le gaz réactionnel ainsi épuré est le plus souvent dirigé sur un séparateur à adsorption préférentielle (par exemple du type PSA), ou encore sur un séparateur par voie membranaire, de façon à obtenir selon le cahier des charges requis dans chaque cas, de l'énergie, ou encore un flux hydrogène, ou encore un flux de CO.

Parmi les oxydants les plus cités dans la littérature concernant la POX, on trouve l'air, ou encore l'air enrichi en oxygène jusqu'à 35 % voire davantage.

On peut citer parmi cette abondante littérature, le document EP-A-217.505, qui décrit la production simultanée d'énergie et d'un mélange à au moins 50 % d'hydrogène, le mélange comportant l'hydrogène étant obtenu comme flux "produit non adsorbé" d'un séparateur à adsorption préférentielle, dans lequel a été traité le gaz réactionnel obtenu en sortie d'une unité POX, l'énergie étant par ailleurs obtenue en envoyant le mélange gazeux adsorbé dans le séparateur (riche en CO, CO₂, N₂, CH₄, etc) dans une unité de production d'électricité par combustion catalytique suivie d'une détente dans une turbine à gaz.

L'objectif de ce document étant de fournir un mélange comportant de l'hydrogène utilisé pour la synthèse de l'ammoniac, des concentrations relativement basses en hydrogène sont tolérées. L'auteur mentionne par ailleurs que le gaz produit par le séparateur par adsorption contient des quantités non négligeables d'argon (qui provient de la source de gaz oxydant utilisée), argon que le document déclare tolérer sans aucun inconvénient.

Les travaux menés à bien par la Demanderesse dans ce domaine ont confirmé que dans le cas de telles sources d'oxygène qui comportent de l'argon, cet argon se retrouve en grande partie dans le mélange riche en hydrogène produit par le procédé. Or, si dans de nombreuses applications ultérieures utilisant un tel mélange riche en hydrogène, l'argon ne représente pas une gêne, dans d'autres cas (tels que des procédés d'hydrodésulfurisation ou encore d'hydrocraquage), l'argon abaisse la pression partielle de l'hydrogène dans les mélanges gazeux utilisés, donnant lieu à des réactions nettement détériorées.

Face à ce problème, on peut envisager dans un premier temps d'utiliser de l'oxygène très pur (typiquement 99,5 %), augmentant ainsi d'autant le coût opératoire de l'unité.

Une autre solution techniquement réalisable pourrait consister à dimensionner l'unité d'adsorption préférentielle PSA de façon à beaucoup mieux arrêter l'argon, mais un tel dimensionnement n'est alors pas sans conséquences sur le coût de l'installation et sur ses performances (baisse du rendement d'extraction en hydrogène et augmentation de la quantité de gaz résiduaire adsorbé basse pression à faible valeur).

Un objectif de la présente invention est de proposer un procédé et une installation de production d'énergie et d'un mélange riche en hydrogène permettant :
- la production simultanée d'énergie et d'un mélange de très bonne pureté en hydrogène (atteignant selon les besoins exprimés, si nécessaire, 99,9 % voire 99,99 % d'hydrogène) ;
- de pouvoir utiliser dans l'opération d'oxydation partielle un oxygène impur (qui peut être selon les cas d'origine très variable, donc comportant le cas échéant, une quantité significative d'argon) ;
- de disposer d'une excellente flexibilité du rapport concentration d'hydrogène du mélange produit/quantité d'électricité produite : l'objectif étant ici de pouvoir modifier ce rapport en fonction de la demande, mais également, si nécessaire, de le maintenir constant malgré des modifications sensibles des caractéristiques (par exemple le rapport HIC) du mélange gazeux entrant hydrocarboné qui est à traiter dans l'unité d'oxydation partielle.

Le procédé de production d'énergie et d'un mélange riche en hydrogène selon l'invention comporte alors la mise en oeuvre des étapes suivantes :
a) on procède, dans une unité d'oxydation partielle, à une oxydation partielle d'un mélange gazeux entrant comprenant un hydrocarbure ou un mélange d'hydrocarbures, à l'aide d'un mélange gazeux oxydant qui comprend de l'oxygène, afin d'obtenir en sortie d'unité, un gaz réactionnel comprenant de l'hydrogène et du monoxyde de carbone CO ;
b) on fait passer le gaz réactionnel obtenu en fin d'étape a), dans un séparateur membranaire, produisant en sa sortie perméat un mélange gazeux perméat enrichi en les composants les plus perméables du gaz réactionnel, et en sa sortie résiduaire, un mélange gazeux résiduaire enrichi en les composants les moins perméables du gaz réactionnel ;
c) on traite le mélange gazeux résiduaire dans une unité de production d'énergie permettant la génération d'électricité ;
d) on sépare le mélange gazeux perméat dans un séparateur à adsorption préférentielle (par exemple du type PSA), de façon à obtenir en tant que gaz produit non adsorbé le mélange gazeux riche en hydrogène requis.

On entend selon l'invention par "séparateur membranaire", une membrane ou module membranaire semi-perméable, le cas échéant, un ensemble de plusieurs membranes ou modules membranaires semi-perméables montés en série et/ou en parallèle, présentant des propriétés de séparation de l'hydrogène par rapport au gaz réactionnel entrant dans le séparateur.

Le procédé selon l'invention comporte donc l'utilisation combinée et en série d'un séparateur membranaire et d'un séparateur à adsorption préférentielle. L'utilisation préférentielle d'un séparateur membranaire à forte sélectivité H₂/N₂ , H₂/CO, et H₂/Ar permet d'alimenter le séparateur à adsorption préférentielle avec un gaz riche en hydrogène, à une pression optimale, alors que le mélange gazeux résiduaire du séparateur membranaire (qui contient l'essentiel du CO, de l'argon, de l'azote) peut être envoyé vers l'unité de production d'électricité.

Comme développé plus loin dans le cadre d'exemples de mise en oeuvre, le procédé selon l'invention permet, par un choix adéquat des caractéristiques du séparateur membranaire, de produire d'une part de l'hydrogène très pur (par exemple allant de 99,5 à 99,9 %), tout en utilisant en tout début de chaîne de l'oxygène impur, donc y compris comportant une concentration significative d'argon.

Par ailleurs, la quantité de gaz résiduaire adsorbé produit par le séparateur par adsorption préférentielle, à très basse pression (donc de faible valeur) est minimisée puisque inversement proportionnelle à la teneur en hydrogène présente à l'entrée de ce séparateur et à son rendement d'extraction.

On rappellera ici brièvement le principe de la séparation de gaz par voie membranaire qui est que, sous l'effet d'une différence de pression partielle de part et d'autre de la membrane, on obtient, côté perméat du séparateur membranaire, un mélange à basse pression, enrichi en les composants les plus perméables du gaz entrant dans le séparateur membranaire, et côté résiduaire du séparateur, un mélange à une pression proche de la pression d'alimentation du mélange entrant et qui est enrichi en les composants les moins perméables.

Par exemple, pour ce qui est de la production d'hydrogène ou de CO, on procède le plus souvent à une récupération à partir de mélanges issus de certaines industries, que l'on sépare sur des membranes présentant des propriétés de séparation de l'hydrogène par rapport aux autres composants du mélange (on utilise par exemple des membranes du type polyaramide), le mélange enrichi en hydrogène étant obtenu côté perméat, alors que le mélange enrichi selon les cas en hydrocarbures ou en CO est obtenu du côté résiduaire de la membrane.

Il apparaît que les performances d'une telle séparation membranaire dépendront très largement des conditions d'utilisation de la membrane, telles que la température, la pression d'alimentation de la membrane, ou encore la teneur, du mélange entrant à séparer, en le composant que l'on souhaite extraire côté perméat.

On sait ainsi pour ce qui est de la température, qu'en augmentant la température de fonctionnement de la membrane, le plus souvent, la perméabilité et donc la productivité de la membrane augmentent, mais sa sélectivité et donc le rendement se dégradent. On entend le plus souvent par l'expression "température de fonctionnement" de la membrane ou du module membranaire, la température obtenue à l'intérieur de la membrane ou du module du fait de la température du gaz entrant qui transite, avec parfois l'intervention supplémentaire d'un système extérieur de chauffe du module membranaire ou de maintien en température (enceinte thermostatée).

On rappellera ici quelques définitions en considérant le cas classique de la production d'azote à partir d'air : le "rendement" de la membrane représente la proportion d'azote présente dans le mélange entrant que l'on retrouve à la sortie résiduaire de la membrane, la sélectivité O₂/N₂ de la membrane représentant quant à elle le rapport des perméances ou perméabilités de l'oxygène et de l'azote au travers de la membrane (sélectivité = perméabilité oxygène/perméabilité azote). Le même type de raisonnement s'applique dans le cas de la séparation de l'hydrogène, le raisonnement devant être inversé en termes de rendement d'extraction puisque c'est ici le mélange perméat enrichi en hydrogène que l'on cherche à récupérer.

On utilisera dans tout ce qui suit la terminologie simplifiée "sélectivité d'un séparateur membranaire" en un gaz donné qui devra s'entendre comme signifiant la sélectivité de ce séparateur en le gaz considéré vis-à-vis du mélange traité dans ce séparateur (la sélectivité étant comme signalé plus haut une notion relative).

On peut obtenir une évolution de la sélectivité d'un séparateur en un gaz donné (par exemple l'hydrogène), par exemple, en mettant en service des modules membranaires de qualités différentes, ou encore en utilisant des modules de même type mais dans des conditions opératoires différentes, notamment de température.

Selon une des mises en oeuvre de l'invention, la concentration d'oxygène du mélange gazeux oxydant varie dans la gamme allant de 21 % à 98 %.

Selon une des mises en oeuvre de l'invention, on procède, entre l'étape d'oxydation partielle et l'étape de séparation membranaire, à au moins l'une des opérations d'épuration suivantes :
- un traitement du gaz réactionnel sur une unité de conversion du sulfure de carbonyl (COS);
- un traitement du gaz réactionnel dans une unité de désulfuration;
- un traitement du gaz réactionnel dans une unité de conversion du monoxyde de carbone CO, au sein de laquelle au moins une partie du CO du gaz réactionnel est convertie en dioxyde de carbone CO₂ et hydrogène H₂ par réaction catalytique avec de la vapeur.

Le gaz résiduaire adsorbé produit par le séparateur par adsorption préférentielle sera avantageusement envoyé dans une unité de production de vapeur.

Selon une autre mise en oeuvre de l'invention, l'étape de désulfuration sera située non pas en amont du séparateur membranaire mais entre le séparateur membranaire et l'unité de production d'électricité sur la ligne reliant la sortie résiduaire du séparateur à cette unité. L'investissement et le coût opératoire d'une unité de désulfuration sont en effet relativement importants. La double configuration de séparation, séparateur membranaire/séparateur à adsorption préférentielle, selon l'invention, permet donc le cas échéant de pouvoir déplacer cette opération sur la ligne résiduaire du séparateur membranaire, en profitant ainsi de la bonne résistance généralement observée des fibres polymères en présence d'H₂S. Cette variante permet de diminuer de façon notable l'investissement ainsi que la consommation d'électricité et de vapeur nécessaires à cette opération de désulfuration dans la mesure où le débit traité par l'unité de désulfuration côté résiduaire du séparateur membranaire est nécessairement moindre.

Par ailleurs, la fraction d'H₂S ayant perméé côté perméat du séparateur membranaire est arrêtée sur le séparateur par adsorption préférentielle (sans dégradation notable des performances de cette unité) pour se retrouver dans le résiduaire basse pression adsorbé de ce séparateur par adsorption préférentielle, qui est comprimé et renvoyé par exemple dans le réseau de gaz combustibles sulfurés de la raffinerie (ou autre source de gaz entrant hydrocarbonné), ou encore dans une unité de production de vapeur.

On constate par ailleurs, qu'au contraire des installations de production simultanée d'hydrogène et d'électricité selon l'Etat de l'Art où le gaz réactionnel issu de l'unité POX est en fait séparé en deux flux envoyés vers deux lignes dédiées offrant peu de synergie, la configuration du procédé selon l'invention permet, de modifier ou même de réguler le rapport entre la concentration d'hydrogène du mélange gazeux riche en hydrogène produit et de la quantité d'électricité produite par l'unité de production d'électricité, en jouant par exemple sur l'un des paramètres suivants :
- le taux de conversion de l'unité de conversion du CO du gaz réactionnel (quand bien entendu une telle unité de conversion est présente entre l'unité POX et le séparateur membranaire) ;
- la sélectivité en hydrogène du séparateur membranaire.

Comme signalé précédemment, on pourra modifier la sélectivité en hydrogène du séparateur en jouant par exemple sur le nombre et la qualité des modules membranaires en service dans le séparateur membranaire, ou bien encore sur la température de fonctionnement du séparateur.

On entend par "température de fonctionnement" selon l'invention, la notion rappelée plus haut dans la présente demande.

Une telle possibilité de modifier ou encore réguler ce rapport H₂/énergie se révèle tout à fait fondamentale pour pouvoir s'adapter aux besoins exprimés par le site utilisateur, mais également pour pouvoir tenir compte et accommoder des modifications sensibles de la qualité (par exemple le rapport H/C) du mélange gazeux entrant à traiter dans l'unité d'oxydation partielle du fait par exemple de variations de production intervenant localement sur le site industriel fournisseur du mélange entrant à traiter dans la POX.

L'invention concerne également une installation de production d'énergie et d'un mélange riche en hydrogène, convenant notamment pour la mise en oeuvre du procédé précédemment décrit, et comprenant :
- une source d'un mélange gazeux entrant comprenant un hydrocarbure ou un mélange d'hydrocarbures ;
- une source d'un mélange gazeux oxydant qui comprend de l'oxygène ;
- une unité d'oxydation partielle, reliée aux sources, pour pouvoir produire en sa sortie un gaz réactionnel comprenant de l'hydrogène et du monoxyde de carbone CO ;
- un séparateur membranaire, dont une entrée est reliée à la sortie de l'unité d'oxydation partielle par une ligne de gaz principale ;
- une unité de production d'électricité, reliée à la sortie résiduaire du séparateur membranaire, par une ligne secondaire ;
- un séparateur de gaz par adsorption préférentielle (par exemple du type PSA), dont une entrée est reliée à la sortie perméat du séparateur membranaire par une ligne tertiaire.

L'installation comprend le cas échéant, entre l'unité d'oxydation partielle et le séparateur membranaire, au moins l'une des unités suivantes d'épuration de gaz, bien connues de l'homme de l'art dans ce domaine :
- une unité de conversion catalytique à la vapeur du monoxyde de carbone CO en dioxyde de carbone CO₂ et hydrogène H₂ ;
- une unité de conversion du sulfure de carbonyl COS ;
- une unité de désulfuration d'un gaz.

Selon une des mises en oeuvre de l'invention, l'installation comprend, sur la ligne secondaire entre le séparateur membranaire et l'unité de production d'électricité, une unité de désulfuration d'un gaz.

D'autres caractéristiques et avantages de la présente invention ressortiront de la description suivante de modes de réalisation donnés à titre illustratif mais nullement limitatif, faite en relation avec les dessins annexés, sur lesquels :
- la figure 1 est une représentation schématique d'une installation de l'Etat de l'Art pour la production simultanée d'hydrogène et d'énergie ;
- la figure 2 est une représentation schématique d'une installation convenant pour la mise en oeuvre du procédé selon l'invention ;
- la figure 3 est une représentation schématique d'une autre installation convenant pour la mise en oeuvre du procédé selon l'invention, mettant en oeuvre une opération de désulfuration située en aval du séparateur membranaire.

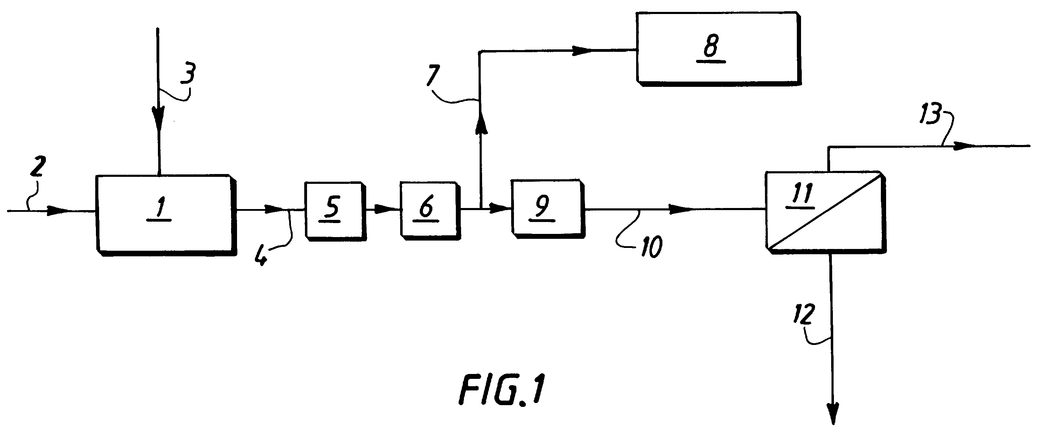

La figure 1 illustre donc de façon schématique une installation selon l'état de l'art, de production simultanée d'hydrogène et d'énergie, où le gaz réactionnel issu de l'unité d'oxydation partielle POX est séparé en deux flux envoyés vers deux lignes dédiées.

On reconnaît sur la figure 1 la présence d'une unité POX d'oxydation partielle 1, alimentée d'une part par un mélange gazeux entrant hydrocarboné 2, et par un mélange oxydant qui comprend de l'oxygène 3.

Le gaz réactionnel 4, résultant de l'opération d'oxydation partielle, subit, avant d'arriver dans un séparateur par adsorption préférentielle 11 (qui est ici du type PSA), des opérations successives de conversion du COS (unité 5), de désulfuration (unité 6), et de conversion partielle du CO (unité 9).

L'unité 9 de conversion du CO est ici nécessaire pour augmenter la teneur en hydrogène du mélange parvenant à l'entrée du PSA, et diminuer sa teneur en CO. Il faut en effet considérer que sans la présence d'une telle conversion du CO, le rendement du PSA serait nettement moins élevé, et donc la quantité de gaz nécessaire à l'entrée du PSA, pour produire la même quantité d'hydrogène, nettement supérieure.

Une partie du gaz réactionnel obtenu en sortie d'unité 6 est envoyée, via une ligne de dérivation dédiée 7, vers une unité de production d'énergie 8.

Le gaz réactionnel épuré 10 obtenu en sortie d'unité 9 atteint quant à lui le séparateur PSA 11, où il donne lieu à la production d'un gaz produit non adsorbé 13, riche en hydrogène, et d'un gaz résiduaire 12 adsorbé (après désorption) éventuellement valorisé dans une unité de production de vapeur ou encore recyclé à l'entrée de l'unité d'oxydation partielle 1.

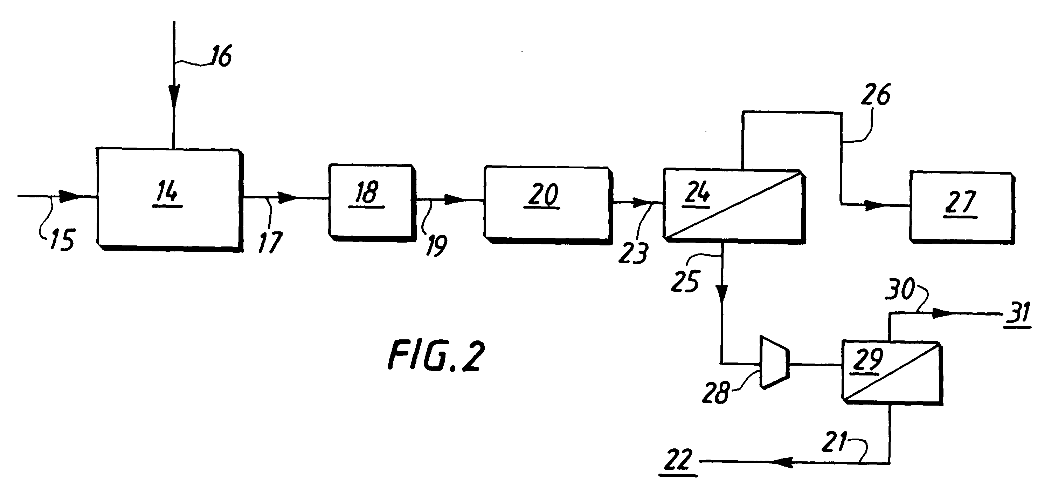

La figure 2 illustre pour sa part une installation convenant pour la mise en oeuvre du procédé selon l'invention, et mettant en oeuvre en série une double opération de séparation membranaire puis par adsorption préférentielle du type PSA.

On a symbolisé par les références 15 et 16 les mélanges gazeux respectivement entrant (riche en hydrocarbures) et oxydant (comportant de l'oxygène) devant réagir dans l'unité 14 d'oxydation partielle, pour donner lieu à la production d'un gaz réactionnel 17 qui comporte de l'hydrogène et du CO.

Comme signalé précédemment, le mélange gazeux entrant (riche en hydrocarbures) pourra être de composition très varié, par exemple du méthane, du charbon etc...

Sur le mode de réalisation représenté, le gaz réactionnel issu de l'unité 14 subit, avant d'arriver dans un séparateur membranaire 24, deux opérations d'épuration : une conversion du COS dans l'unité 18, une désulfuration dans l'unité 20.

Le gaz réactionnel ainsi épuré 23 arrive dans un séparateur membranaire 24 où il donne lieu à la production, en sortie résiduaire du séparateur membranaire, d'un mélange gazeux résiduaire 26, riche notamment en CO, CO₂ et N₂, qui est dirigé vers une unité 27 de production d'électricité.

On obtient côté perméat du séparateur 24, un mélange gazeux perméat 25, obtenu à basse pression, riche en hydrogène, que l'on recomprime via un compresseur 28 avant qu'il n'atteigne un séparateur par adsorption préférentielle du type PSA 29, afin de donner lieu à la production d'un gaz produit non adsorbé 30, à haute pression, riche en hydrogène, et un gaz résiduaire 21 adsorbé, à basse pression, riche notamment en CO₂ et CO.

Le mélange gazeux 30 est alors prêt à être envoyé vers un éventuel poste utilisateur 31 d'un tel mélange gazeux riche en hydrogène. Le mélange résiduaire 21 à basse pression peut quant à lui être par exemple envoyé vers une unité de production de vapeur 22, ou encore être renvoyé vers la source de gaz entrant riche en hydrocarbures qui peut être par exemple une raffinerie.

Ce schéma de fonctionnement d'une installation de mise en oeuvre du procédé selon l'invention illustre le fait qu'il est possible, par ce procédé, et selon les spécifications requises par chaque site utilisateur, de se passer de l'étape de conversion du CO.

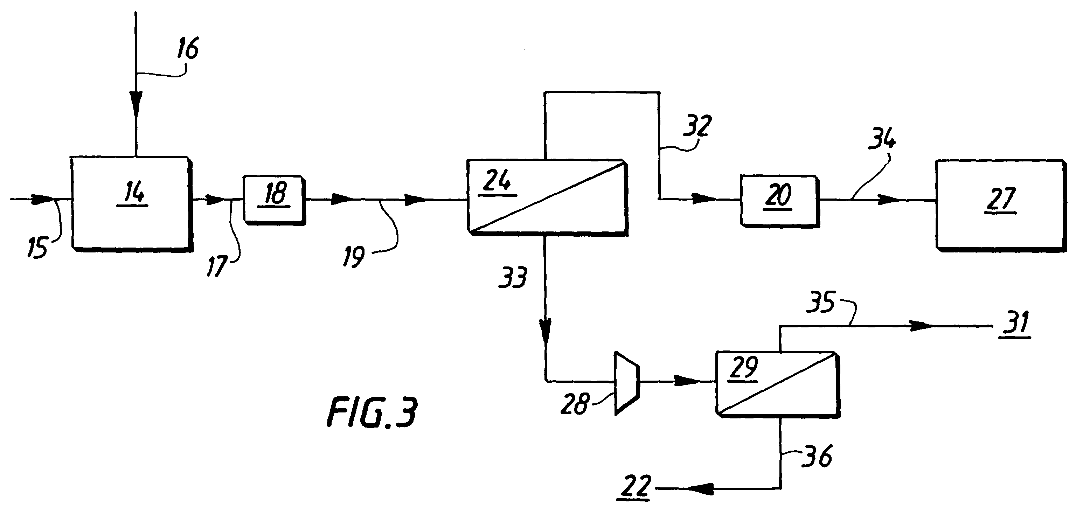

La figure 3 offre une variante de l'installation précédemment décrite dans le cadre de la figure 2, où l'unité de désulfuration 20 n'est plus ici placée en amont du séparateur membranaire 24, mais en aval de ce séparateur 24, sur la ligne secondaire reliant la sortie résiduaire du séparateur membranaire 24 à l'unité 27 de production d'électricité.

Le gaz réactionnel 19 parvenant dans ce cas au séparateur membranaire 24 ayant subi une opération globale d'épuration différente de celle subie dans le cadre de la figure 2, le mélange gazeux séparé dans le séparateur membranaire 24 est donc différent de celui séparé dans le cadre de la figure 2, on a donc symbolisé par des nombres différents les différents mélanges gazeux intervenant en aval du séparateur et parvenant respectivement à l'unité de production d'électricité 27, au séparateur PSA 29, au poste utilisateur 31, ou encore au point de récupération 22 du mélange gazeux résiduaire basse pression produit par le PSA 29.

Les tableaux I, II et III illustrent les exemples suivants de mise en oeuvre :
- tableau I : un exemple comparatif mettant en oeuvre l'installation de la figure 1, avec un mélange oxydant à 99,5 % d'oxygène ;
- tableau II : un exemple comparatif mettant en oeuvre l'installation de la figure 1, avec un mélange oxydant impur, à 95 % d'oxygène ;
- tableau III : un exemple de mise en oeuvre de l'invention, dans le cadre de l'installation de la figure 2, avec utilisation d'un mélange oxydant à 95 % d'oxygène.

On constate alors sur l'exemple du tableau I (qui met en oeuvre une solution d'utilisation d'un oxygène très pur 99,5 %), l'obtention d'un mélange produit non adsorbé obtenu en sortie du PSA, très pur en hydrogène, avec une concentration résiduelle d'argon voisine de 0,1 %.

Une partie du gaz réactionnel obtenu en sortie d'unité 6 étant envoyée, via une ligne dédiée, vers l'unité de production d'énergie, ce gaz n'a donc subi aucune opération de séparation sélective, il contient alors presque à parts égales du CO et de l'hydrogène.

L'exemple comparatif du tableau Il illustre pour sa part une solution mettant en oeuvre l'installation de l'état de l'art avec un mélange oxydant basse pureté (95 % d'oxygène). On retrouve alors une présence sensible d'argon (de l'ordre de 1 %) dans le mélange gazeux produit obtenu en sortie produit du PSA, entachant d'autant la pression partielle d'hydrogène dans ce mélange produit en vue de son utilisation ultérieure dans des opérations sensibles telles que hydrodésulfurisation ou encore hydro-craquage.

La remarque précédemment effectuée sur la composition du mélange gazeux envoyé vers l'unité de production d'électricité peut également être effectuée ici.

On constate au contraire, en observant les résultats de l'exemple du tableau III selon l'invention, que le procédé décrit permet d'obtenir, à partir d'une source oxydante de basse pureté en oxygène (comportant 5 % d'argon résiduel), en sortie produit du PSA un hydrogène de très haute pureté (voisine de 99,9 %), avec une concentration résiduelle d'argon admissible (de l'ordre de 0,1 %).

Comme décrit précédemment, la double opération selon l'invention de séparation membranaire suivie d'une séparation par adsorption préférentielle permet donc d'une part d'obtenir à partir d'un oxygène impur une excellente sélectivité en hydrogène, tout en dirigeant vers l'unité de production d'électricité, un mélange gazeux tel qu'obtenu en sortie résiduaire du séparateur membranaire, dont la composition est très sélectivement déterminée (en l'occurrence très riche en CO).

Quoique la présente invention ait été décrite en relation avec des modes de réalisation particuliers, elle ne s'en trouve pas limitée pour autant mais est au contraire susceptible de modifications et de variantes qui apparaîtront à l'homme de l'art dans le cadre des revendications ci-après.

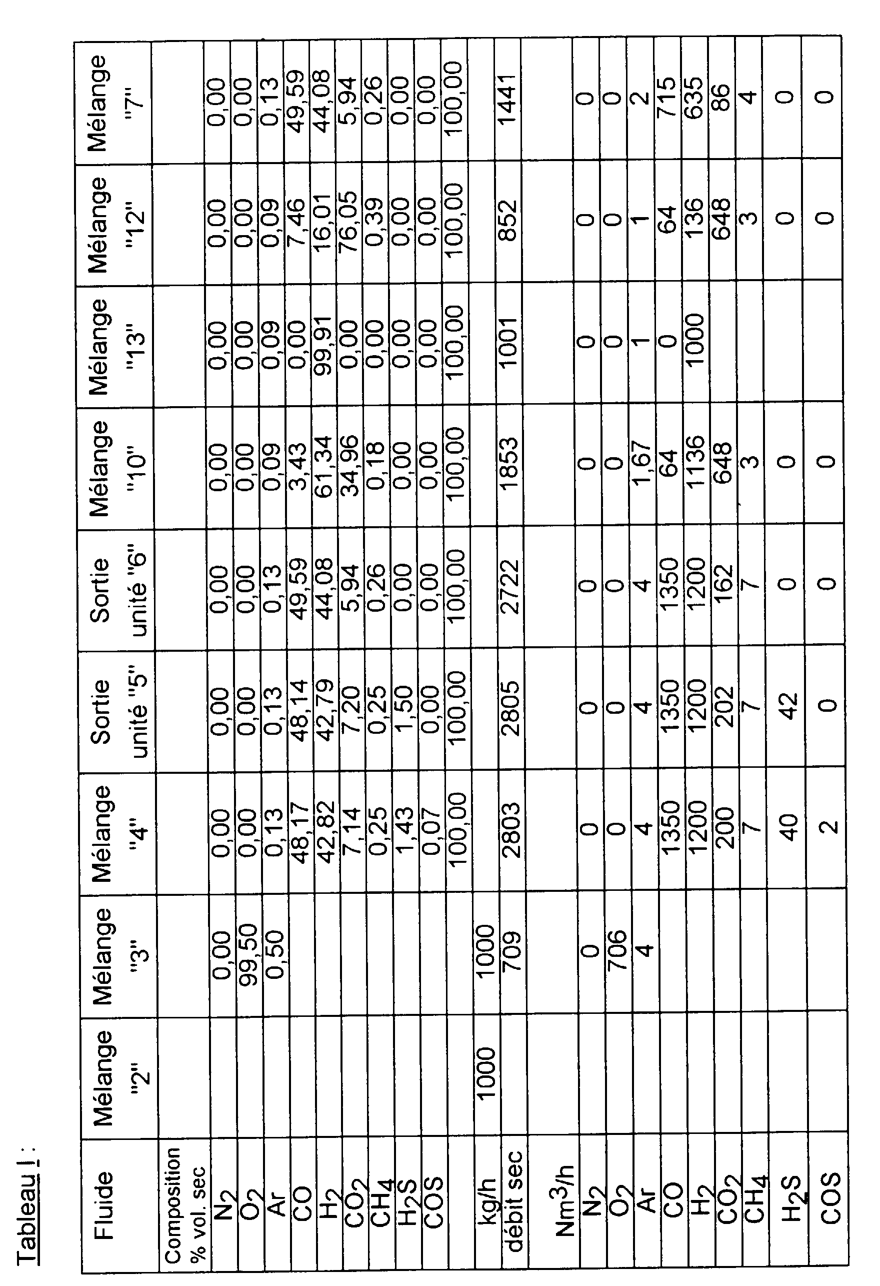

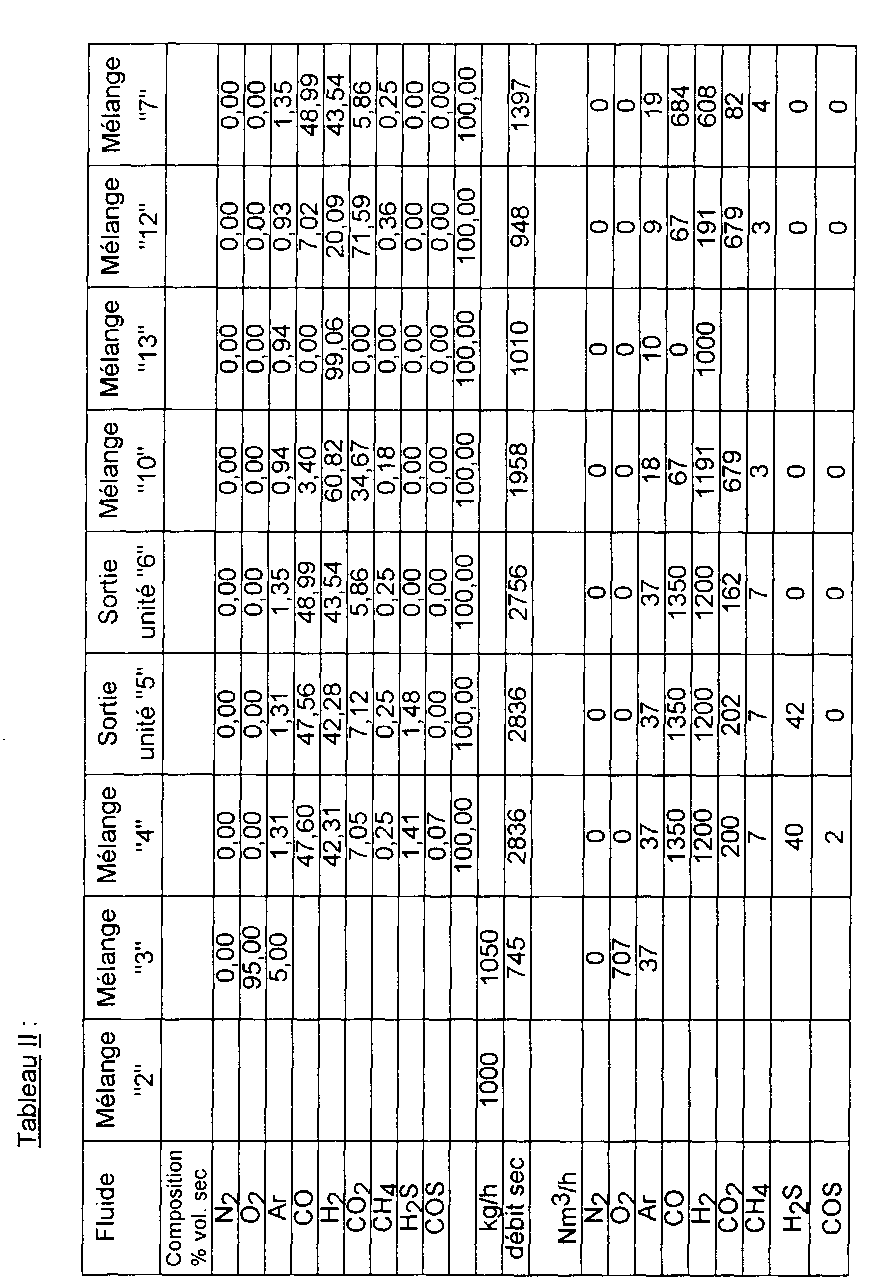

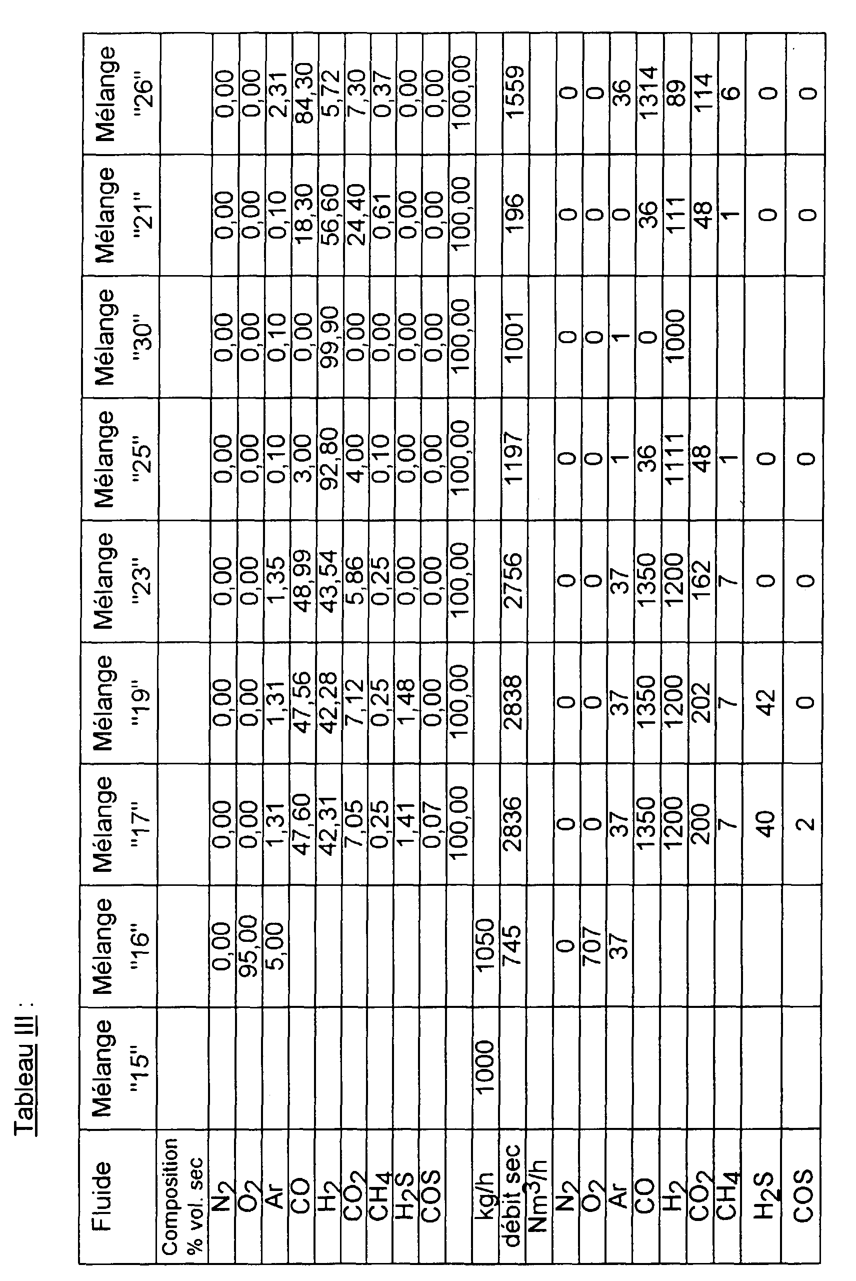

## Revendications

1. Procédé de production d'énergie et d'un mélange riche en hydrogène, comprenant les étapes suivantes :
a) on procède, dans une unité (14) d'oxydation partielle à une oxydation partielle d'un mélange gazeux entrant (15) comprenant un hydrocarbure ou un mélange d'hydrocarbures, à l'aide d'un mélange oxydant (16) qui comprend de l'oxygène, afin d'obtenir en sortie d'unité un gaz réactionnel (17) qui comprend de l'hydrogène et du monoxyde de carbone CO ;
b) on fait passer le gaz réactionnel obtenu en fin d'étape a), dans un séparateur membranaire (24), pour produire en sa sortie perméat un mélange gazeux perméat (25) enrichi en les composants les plus perméables du gaz réactionnel, et en sa sortie résiduaire, un mélange gazeux résiduaire (26) enrichi en les composants les moins perméables du gaz réactionnel ;
c) on traite ledit mélange gazeux résiduaire (26) dans une unité (27) de production d'électricité ;
d) on sépare ledit mélange gazeux perméat (25) dans un séparateur (29) à adsorption préférentielle, de façon à obtenir en tant que gaz produit non adsorbé ledit mélange gazeux (30) riche en hydrogène.

2. Procédé selon la revendication 1, caractérisé en ce que la concentration en oxygène du mélange oxydant est comprise dans la gamme allant de 21 % à 98 %.

3. Procédé selon la revendication 1 ou 2, caractérisé en ce que le séparateur à adsorption préférentielle (29) produit un gaz résiduaire adsorbé (21) que l'on envoie dans une unité (22) de production de vapeur.

4. Procédé selon l'une des revendications 1 à 3, caractérisé en ce qu'on procède, entre l'étape d'oxydation partielle (14) et l'étape de séparation sur séparateur membranaire (24), à au moins une des étapes d'épuration suivantes :
- un traitement du gaz réactionnel dans une unité (18) de conversion du sulfure de carbonyl COS ;
- un traitement du gaz réactionnel dans une unité (20) de désulfuration ;
- un traitement du gaz réactionnel dans une unité de conversion du monoxyde de carbone, au sein de laquelle au moins une partie du CO du gaz réactionnel est convertie en dioxyde de carbone CO₂ et hydrogène H₂, par réaction catalytique avec de la vapeur.

5. Procédé selon l'une des revendications 1 à 3, caractérisé en ce qu'on fait passer ledit mélange gazeux résiduaire (32) obtenu à la sortie résiduaire dudit séparateur membranaire, avant qu'il n'atteigne l'unité de production d'électricité (27), dans une unité (20) de désulfuration.

6. Procédé selon l'une des revendications 1 à 5, caractérisé en ce que l'on régule le rapport de la concentration d'hydrogène dudit mélange gazeux riche en hydrogène à la quantité d'électricité produite par ladite unité de production d'électricité durant l'étape c), en modifiant au moins l'un des paramètres suivants :
- le taux de conversion de l'unité de conversion du CO ;
- la sélectivité en hydrogène dudit séparateur membranaire.

7. Procédé selon la revendication 6, caractérisé en ce qu'on modifie la sélectivité en hydrogène du séparateur membranaire en modifiant au moins l'une des caractéristiques suivantes de fonctionnement du séparateur : le nombre de modules membranaires en service dans le séparateur, la température de fonctionnement du séparateur.

8. Installation de production d'énergie et d'un mélange riche en hydrogène, convenant notamment pour la mise en oeuvre du procédé selon l'une des revendications 1 à 7, comprenant:
- une source (15) d'un mélange gazeux entrant comprenant un hydrocarbure ou un mélange d'hydrocarbures ;
- une source (16) d'un mélange gazeux oxydant qui comprend de l'oxygène ;
- une unité (14) d'oxydation partielle, reliée aux sources, pour pouvoir produire en sa sortie un gaz réactionnel comprenant de l'hydrogène et du monoxyde de carbone CO ;
- un séparateur membranaire (24), dont une entrée est reliée à la sortie de l'unité d'oxydation partielle par une ligne principale ;
- une unité (27) de production d'électricité, reliée à la sortie résiduaire du séparateur membranaire, par une ligne secondaire ;
- un séparateur (29) de gaz à adsorption préférentielle, dont une entrée est reliée à la sortie perméat du séparateur membranaire par une ligne tertiaire.

9. Installation selon la revendication 8, caractérisée en ce qu'elle comprend, entre l'unité d'oxydation partielle (14) et le séparateur membranaire (24), au moins l'une des unités suivantes d'épuration de gaz :
- une unité de conversion catalytique à la vapeur du monoxyde de carbone CO en dioxyde de carbone CO₂ et hydrogène H₂ ;
- une unité de conversion du sulfure de carbonyl COS ;
- une unité de désulfuration.

10. Installation selon la revendication 8, caractérisée en ce qu'elle comprend, sur la ligne secondaire, entre le séparateur membranaire et l'unité de production d'électricité, une unité de désulfuration.
